# EUROPÄISCHE PATENTSCHRIFT

(11) **EP 2 549 853 B1**
(45) Veröffentlichungstag und Bekanntmachung des Hinweises auf die Patenterteilung: **05.04.2017**
(21) Anmeldenummer: 10711569.3
(22) Anmeldetag: 24.03.2010
(51) Int. Cl.: A01G 3/06

(54) **GARTENSCHNEIDGERÄT, INSBESONDERE GRASSCHERE**
HORTICULTURAL CUTTING DEVICE, IN PARTICULAR GRASS SHEARS
OUTIL DE COUPE DE JARDIN, NOTAMMENT CISAILLES À GAZON

(43) Veröffentlichungstag der Anmeldung: 30.01.2013
(73) Patentinhaber: HUSQVARNA AB, 561 82 Huskvarna (SE)
(72) Erfinder: KOHL, Peter, 89257 Illertissen (DE)
(74) Vertreter: Finkele, Rolf
(86) Internationale Anmeldenummer: PCT/EP2010/001846
(87) Internationale Veröffentlichungsnummer: WO 2011/116786

(56) Entgegenhaltungen:
- EP-A1- 0 736 245
- EP-A1- 1 886 551
- EP-A2- 2 116 127
- EP-A2- 2 228 172
- US-A1- 2001 025 423
- US-B1- 7 650 992

## Beschreibung

Die Erfindung betrifft ein Gartenschneidgerät, insbesondere eine Grasschere.

Bei Gartenschneidgeräten wie z. B. Grasscheren ist es bekannt, bei Nichtgebrauch des Geräts die Messeranordnung mit einer Schutzhülle abzudecken. Die Schutzhülle soll manuell werkzeuglos mit dem Gerät verbindbar und von diesem lösbar sein. Die Schutzhülle soll bei versehentlichem Einschalten des Geräts durch die Messeranordnung nicht beschädigt werden und sich auch nicht von selbst von dem Gerät lösen können. Eine ausschließlich reibschlüssige Verbindung mit dem Gerät reicht daher in der Regel nicht aus. Vorteilhafterweise kann die Schutzhülle auch mit der vom Gerät gelösten Messeranordnung verbunden sein.

Eine Schutzhülle, welche diese Anforderungen erfüllt, ist für eine motorbetriebene Grasschere beispielsweise in der Form bekannt, dass eine taschenförmige Schutzhülle zwei Halbschalen enthält, welche an einer dem Gerätegehäuse abgewandten Stirnkante bei den Spitzen der Messeranordnung gelenkig miteinander verbunden sind und entlang der Seitenkanten der Messeranordnung an Trennfugen aneinanderstoßen. Die Halbschalen sind über zueinander komplementäre lösbare Verbindungselemente miteinander zu einer geschlossenen Schutzhülle verbindbar. An dem im Betrieb feststehenden Untermesser der Messeranordnung sind an den gegenüber liegenden Außenkanten gegen einen geraden Kantenverlauf zurückspringende Aussparungen ausgebildet. An wenigstens einer der beiden Halbschalen sind Halteelemente in Richtung der anderen Halbschale ragend ausgebildet, welche bei an dem Gerät geschlossener Schutzhülle in den Aussparungen einliegen und ein Abrutschen der Schutzhülle von der Messeranordnung von dem Gerätegehäuse weg zuverlässig verbunden.

Die beschriebene Schutzhülle ist ausschließlich an dem Untermesser der Messeranordnung gehalten, wobei ein Abstand der Schutzhülle zu dem Obermesser durch auf der Oberseite des Untermessers aufstehende Distanzelemente eingehalten wird, sodass auch bei versehentlichem Einschalten des Geräts das Obermesser sich ohne Berührung mit der Schutzhülle bewegen kann.

Zum Abnehmen der Schutzhülle von der Messeranordnung werden die beiden Halbschalen an den Trennfugen unter Lösen der Eingriffe der Verbindungselemente und Aufklappen der Schutzhülle voneinander weg bewegt und die Halteelemente können senkrecht zur Messerebene aus den Aussparungen ausrücken und die Schutzhülle kann abgenommen werden.

Eine derartige Schutzhülle hat sich zwar bewährt und ist durch den Aufbau aus zwei gelenkig verbundenen Halbschalen kostengünstig als ein einteiliger Kunststoff-Spritzgusskörper herstellbar, erweist sich aber hinsichtlich der Verbindung zwischen den Halbschalen in der Handhabung und in der Haltbarkeit des Verbindungselements als nicht zufriedenstellend.

Das Dokument US 7 650 992 B1 beschreibt eine Gartenschere mit einem Sperrelement zum Aufschieben auf die Spitzen der Scherenklingen, wodurch ein Berührschutz realisiert wird.

Das Dokument US 2001/025423 A1 offenbart eine abnehmbare Schutzvorrichtung für das Schwert einer Kettensäge mit einem Schnappmechanismus um die Schutzvorrichtung mit der Kettensäge zu verbinden.

Der Erfindung liegt die Aufgabe zugrunde, ein Gartenschneidgerät mit einer zuverlässig an der Messeranordnung gehaltenen Schutzhülle mit verbesserter Handhabbarkeit anzugeben.

Die Erfindung ist im unabhängigen Anspruch beschrieben. Die abhängigen Ansprüche enthalten vorteilhafte Ausgestaltungen und Weiterbildungen der Erfindung.

Erfindungsgemäß ist/sind das Halteelement und/oder die Haltestruktur mit wenigstens einer schräg zu der Abziehrichtung verlaufenden Anlagefläche ausgebildet, an der eine in Abziehrichtung wirkende Benutzerkraft in eine das Halteelement entgegen der Rückstellkraft von der Haltestruktur weg wirkende Kraftkomponente umgesetzt wird. Dadurch ist die Haltekraft des Eingriffs zwischen Halteelement und Haltestruktur durch eine in Abziehrichtung wirkende manuelle Benutzerkraft überwindbar.

Durch das wenigstens eine elastisch verformbare Halteelement ergibt sich bei an dem Gerät gehaltener Schutzhülle aufgrund des formschlüssigen Eingriffs
des Halteelements mit einer Haltestruktur des Geräts ein zuverlässiges Halten der Schutzhülle am Gerät gegen unbeabsichtigtes Abfallen. Durch elastische Verformung des Halteelements entgegen einer dabei auftretenden Rückstellkraft kann das Halteelement aus dem formschlüssigen Eingriff mit der Haltestruktur austreten und die Schutzhülle zum Abziehen von dem Gerät freigeben.

Zum Verbinden der Schutzhülle mit dem Gerät kann vorteilhafterweise die Schutzhülle in Richtung des Gerätegehäuses aufgeschoben werden, wobei das Haltelement bei Erreichen einer Befestigungsposition der Schutzhülle selbsttätig in den formschlüssigen Eingriff mit der Haltestruktur tritt. Vor Erreichen dieser Befestigungsposition der Schutzhülle an dem Gerät ist vorteilhafterweise das Halteelement entgegen der genannten Rückstellkraft elastisch verformt und der selbsttätige Eingriff in die Haltestrukturen erfolgt unter der Einwirkung der Rückstellkraft.

Die Messeranordnung sei dabei als Teil des Geräts verstanden. Die Haltestruktur ist vorzugsweise ausschließlich an der Messeranordnung ausgebildet, so dass die Schutzhülle auch zusammen mit der vorteilhafterweise manuell werkzeuglos von dem Gerätegehäuse lösbaren Messeranordnung als von dem Gerätegehäuse getrennte Einheit handhabbar ist.

Die Messeranordnung enthält in bevorzugter, an sich für Grasscheren oder sogenannte Buchsbaumscheren bekannter Art ein im Betrieb bezüglich des Gerätegehäuses feststehendes Untermesser und ein dazu quer zu einer Arbeitsrichtung oszillierend bewegtes Obermesser. Das bewegte Obermesser ragt aus Sicherheitsgründen während der oszillierenden Bewegung zu keinem Zeitpunkt über die Kontur des Untermessers hinaus und ist quer zur Arbeitsrichtung schmäler als das Untermesser. Die Haltestruktur ist in bevorzugter Ausführung an dem Untermesser ausgebildet, vorzugsweise an einer Position, welche von dem Obermesser bei der oszillierenden Bewegung nicht überstrichen wird. Obermesser und Untermesser liegen im wesentlichen an einer Schneidebene aneinander.

Das Halteelement kann beispielsweise zur Herstellung des formschlüssigen Eingriffs quer zu der Schneidrichtung in eine Haltestruktur, insbesondere eine Aussparung des Untermessers, insbesondere von dessen Unterseite her einrücken bzw. zum Lösen des Eingriffs aus der Aussparung ausrücken. Vorzugsweise erfolgt die Bewegung des Halteelements beim Einrücken in die Haltestruktur und beim Ausrücken aus der Haltestruktur im wesentlichen parallel zu der Schneidebene der Messeranordnung. Die Haltestruktur an der Messeranordnung ist hierfür vorteilhafterweise als ein Rücksprung gegen eine seitliche Außenkante des Untermessers, z. B. eine Stufe oder eine Aussparung gebildet. Vorzugsweise ist an seitlich gegenüber liegenden Außenkanten des Untermessers je eine Haltestruktur ausgebildete und die Schutzhülle mit zwei zu diesen beiden Haltestrukturen in Eingriff tretenden Halteelementen ausgestattet.

Die Meseranordnung kann zusätzlich zu Obermesser und Untermesser noch einen Messerhalter enthalten, an welchem Obermesser und Untermesser dauerhaft gehalten sind. Eine Haltestruktur zur Verbindung der Schutzhülle mit der Messeranordnung kann dann auch an dem Messerhalter, welcher vorteilhafterweise ein Kunststoff-Spritzgussteil ist, ausgebildet sein.

Die Schutzhülle ist vorteilhafterweise ein im Kunststoff-Spritzgussverfahren herstellbares bzw. hergestelltes Bauteil. Vorteilhafterweise besteht auch das wenigstens eine Halteelement aus Kunststoff. Die Schutzhülle als KunststoffBauteil kann als ein einheitlicher Spritzgusskörper in flacher taschenförmiger Gestalt einschließlich des wenigstens einen Halteelements gefertigt sein. Hierbei ergeben sich aber Einschränkungen bei der Gestaltung insbesondere des Innenraums der Schutzhülle und/oder erhebliche Aufwendungen beim Spritzgusswerkzeug. Auch die Reinigung des Innenraums der Schutzhülle ist erschwert.

Vorzugsweise ist daher die Schutzhülle in der an sich bekannten Weise aus zwei flachen Halbschalen gebildet, welche zu der taschenförmigen Gestalt der Schutzhülse zusammengefügt werden. Vorteilhafterweise können die beiden Halbschalen lösbar zusammengefügt sein, um ein Öffnen der Schutzhülle zu gelegentlichen Reinigungszwecken zu ermöglichen. Für das häufige Herstellen und Lösen der Verbindung zwischen Schutzhülle und Gerät braucht die Schutzhülle nicht geöffnet zu werden. Das wenigstens eine Halteelement ist vorteilhafterweise einteilig an einer der beiden Halbschalen ausgeformt.

Das Halteelement kann mit der Haltestruktur einen Sperr-Eingriff mit hoher, nicht manuell zerstörungsfrei überwindbarer Haltekraft bilden und zum Lösen manuell quer zur Abziehrichtung, in welcher die Schutzhülle von dem Gerät gelöst wird, aus dem Eingriff heraus verlagert werden und erst dann eine Bewegung der Schutzhülle in Abziehrichtung freigeben.

In einer bevorzugten Ausführungsform, in welcher die Haltestruktur an einer seitlichen Außenkante der Messeranordnung ausgebildet ist, ist vorteilhafterweise das Halteelement als ein von einer Seitenwand der Schutzhülle zu der Außenkante der Messeranordnung hin gerichtetes Federelement ausgeführt.

Bei einteilig im Kunststoff-Spritzgussverfahren mit wenigstens einer Halbschale der Schutzhülle hergestelltem Kunststoff-Federelement ist vorteilhafterweise in der Deckwand der Halbschale im Bereich des Federelements ein Flächenbereich ausgespart, welcher von der Seitenwand zur Mitte der Deckwand hin über das Federelement hinaus reicht. Hierdurch kann die Spritzgussform für die Halbschale mit dem Federelement vorteilhafterweise einfach ausgebildet sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Messeranordnung und eine Schutzhülle in zwei Ansichten,
- Fig. 2: eine Schrägansicht eines Kunststoffkörpers für eine Schutzhülle,
- Fig. 3: den Kunststoffkörper nach Fig. 2 in weiteren Ansichten,
- Fig. 4: unterschiedliche Positionen der Schutzhülle an der Messeranordnung,
- Fig. 5: eine Seitenansicht zu Fig. 4 (C),
- Fig. 6: einen vergrößerten Ausschnitt aus Fig. 4 (C),
- Fig. 7: eine alternative Ausführung.

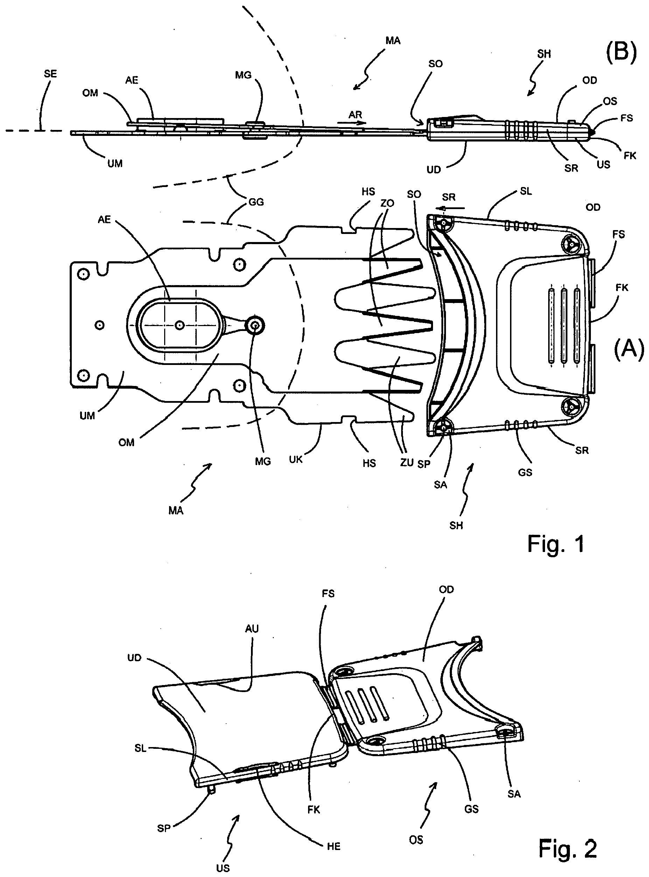

Fig. 1 zeigt einen Teil eines als Grasschere ausgeführten Gartenschneidgerätes mit einer Messeranordnung MA und einer Schutzhülle SH, wobei Fig. 1 (A) eine Draufsicht von oben und Fig. 1 (B) eine Seitenansicht zeigt. Das Gerätegehäuse GG des Schneidgeräts ist mit unterbrochener Linie lediglich angedeutet.

Die Messeranordnung MA enthält in gebräuchlicher Weise ein Obermesser OM und ein Untermesser UM, welche in einem Messergelenk MG relativ zueinander verschwenkbar sind. Von dem Gerätegehäuse weg weisend in einer Arbeitsrichtung AR weist das Obermesser OM mehrere Schneidfinger ZO und das Untermesser mehrere Gegenschneidfinger ZU auf. Das Obermesser ZO führt im Betrieb eine oszillierende Schwenkbewegung SB um das Messergelenk MG auf, wobei die Schneidfinger ZO des Öbermessers die Lücken zwischen den Schneidfingern ZU des Untermessers alternierend in entgegen gesetzten Richtungen überstreichen und an den aufeinander zu bewegten Schneidkanten von Obermesser und Untermesser in den Lücken des Untermessers einliegendes Schnittgut schneiden. Der Antrieb erfolgt typischerweise über einen Exzenterzapfen auf einer motorseitigen Antriebswelle, welche in eine Exzenteraufnahme AE in Form eines Langlochs eingreift. Obermesser und Untermesser sind typischerweise plattenförmig, wobei das Untermesser in der Regel eine größere Plattendicke besitzt und im wesentlichen eine Schneidebene SE bestimmt. Obermesser und Untermesser sind auf der den Schneidfingern abgewandten Seite des Messergelenks MG beabstandet voneinander unter elastischer Vorspannung gegeneinander abgestützt, so dass während der oszillierenden Bewegung des Obermessers die aufeinander zu bewegten Schneidkanten der Schneidfinger ZO des Obermessers und der Schneidfinger ZU des Untermessers mit entlang der Schneidkanten wandernden Anlagepunkten aneinander anliegen. Derartige Messeranordnungen sind bei motorisch angetriebenen Grasscheren und in ähnlicher Weise auch bei Buchsbaumscheren an sich bekannt und gebräuchlich.

Die Messeranordnung ist durch Seitenkanten UK des Untermessers UM seitlich begrenzt, wobei insbesondere bei Grasscheren diese Außenkanten typischerweise annähernd parallel zur Arbeitsrichtung AR verlaufen. Das Obermesser tritt bei seiner oszillierenden Schneidbewegung SB in keiner Stellung über die Seitenkanten UK des Untermessers seitlich hinaus. In Fig. 1 (A) ist eine Mittenstellung der oszillierenden Bewegung SB des Obermessers relativ zu dem bezüglich des Gerätegehäuses GG feststehenden Obermesser dargestellt.

In Fig. 1 ist eine taschenförmige Schutzhülle SH in Arbeitsrichtung vor der Messeranordnung MA liegend eingezeichnet. Die Schutzhülle SH weist den Spitzen der Schneidfinger der Messeranordnung MA zugewandt eine Öffnung SO auf, mit welcher die taschenförmige Schutzhülle in Steckrichtung SR auf den über das Gerätegehäuse GG hinaus ragenden Teil der Messeranordnung MA aufschiebbar ist. In vollständig auf die Messeranordnung aufgeschobener Schutzhülle SH ist diese in noch zu beschreibender Weise formschlüssig an der Messeranordnung gehalten, wofür an dem Untermesser gegen die Seitenkanten UK zur Mitte des Untermessers hin zurück springende Haltestrukturen HS ausgebildet sind. Die Haltestrukturen HS weisen insbesondere quer zur Steckrichtung gegen die Außenkanten UK zurück springende Kanten auf, in welche Halteelemente der Schutzhülle SH in formschlüssigen Eingriff treten können.

Die Schutzhülle SH ist vorteilhafterweise aus einer oberen Halbschale OS und einer unteren Halbschale US zusammen gesetzt, welche einen flachen Innenraum der Schutzhülle SH begrenzen. Der Innenraum SH weist entsprechend der relativ zur Breite der Messeranordnung geringen Höhe der Messeranordnung eine senkrecht zur Schneidebene SE geringe Höhe im Vergleich zur Abmessung es Innenraums in der Schneidebene SE auf. Der Innenraum ist um ein geringes Maß größer als die von der Schutzhülle im aufgesteckten Zustand umgebene Messeranordnung. Entlang der Außenkanten UK des Untermessers weist die Schutzhülle SH schmale Seitenwände SL, SR auf, welche den Innenraum der Schutzhülle seitlich begrenzen. An den Seitenwänden können Griffstrukturen GS ausgebildet sein, an welchen eine Benutzerhand zum Aufstecken und Abziehen der Schutzhülle angreifen kann. Die senkrecht zur Schneidebene den Innenraum nach oben und nach unten begrenzenden breiten Hüllenflächen seien als obere Deckwand OD bzw. untere Deckwand DU bezeichnet.

Die Unterteilung der taschenförmigen Schutzhülle SH in eine obere Halbschale OS und eine untere Halbschale US ist an sich für derartige Schutzhüllen bekannt und ermöglicht vorteilhafterweise eine besonders günstige Ausführung eines Spritzgusswerkzeugs zur Herstellung der Schutzhülle im Kunststoff-Spritzgussverfahren unter Ausbildung von dreidimensionalen Strukturen in der oberen Halbschale OS und/oder der unteren Halbschale US. Vorteilhafterweise kann für beide Halbschalen dabei ein einfaches zweigeteiltes Werkzeug ohne Schieber und ohne Zwangsentformung der Kunststoffkörper benutzt werden. Insbesondere kann, wie an sich auch bereits bekannt, ein einheitliches Werkzeug zur gleichzeitigen Herstellung beider Halbschalen US, OS benutzt werden, in welchem die beiden Halbschalen US und OS über Kunststoffscharniere FS im Bereich der Stirnkanten FK der Schutzhülle miteinander gelenkig verbunden sind. Fig. 2 zeigt eine Schrägansicht eines solchen Kunststoff-Spritzgusskörpers mit über ein Kunststoffscharnier FS zusammen hängenden oberen und unteren Halbschalen einer Schutzhülle. Über Steckstifte SP an der unteren Halbschale US und Steckaufnahmen SA an der oberen Halbschale OS können die beiden Halbschalen nach Verschwenkung um das Kunststoffscharnier FS unter Eingriff der Steckstifte SP in die Steckaufnahmen SA miteinander verbunden werden zu der in Fig. 1 (A) und (B) dargestellten taschenförmigen Schutzhülle.

Während bei bekannten solchen Schutzhüllen die Schutzhülle für das Aufsetzen und Abnehmen von der Messeranordnung immer wieder unter Öffnen und Schließen der Steckverbindungen zwischen den Steckstiften SP und den Steckaufnahmen SA geöffnet und geschlossen werden muss, sieht die Erfindung vor, dass zum Aufstecken der Schutzhülle auf die Messeranordnung und zum Abziehen der Schutzhülle von der Messeranordnung die Schutzhülle nicht mehr geöffnet werden muss, also die Steckverbindungen der Steckstifte SP in den Steckaufnahmen SA bestehen bleiben können. Vorteilhafterweise können die beiden Halbschalen dennoch voneinander gelöst werden, um den Innenraum der Schutzhülle zu reinigen.

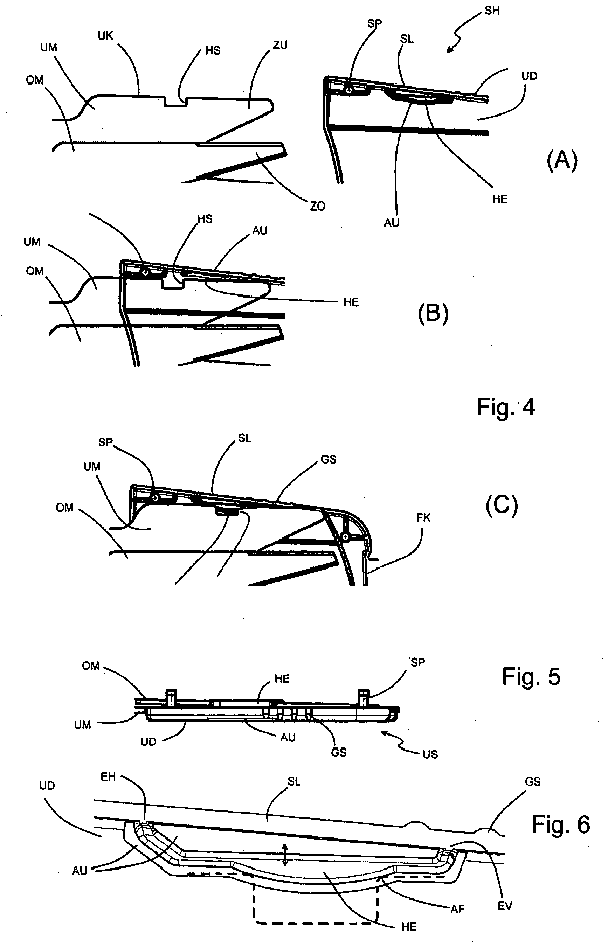

Zum Aufstecken und Lösen der Schutzhülle auf die bzw. von der Messeanordnung sind vorteilhafterweise in den Innenraum der Schutzhülle ragende Halteelemente vorgesehen, welche elastisch verformbar sind und in aufgesteckter Position mit den Haltestrukturen HS in Eingriff treten. Die elastisch verformbaren Halteelemente sind vorteilhafterweise bei ihrer elastischen Verformung parallel zu der Schneidebene SE verschiebbar. In bevorzugter Ausführungsform sind die Halteelemente HE einteilig mit einer der beiden Halbschalen ausgeführt, wofür im skizzierten Beispiel ein Kunststoff-Halteelement HE in Form eines elastisch verformbaren, zur Mitte des Innenraums der Schutzhülle hin gewölbten streifenförmigen Bogenelements ausgeführt, welches an in Streifenrichtung entgegen gesetzten Enden mit einer Seitenwand der unteren Halbschale US unterbrechungsfrei verbunden ist. In Fig. 4. ist in der Abbildungsfolge von dem gelösten Zustand nach Fig. 4 (A), in welchem die Schutzhülle SH von der Messeranordnung MA getrennt ist, über eine Zwischenposition nach Fig. 4 (B) mit teilweise auf die Messeranordnung aufgeschobener Schutzhülle bis zu der in der vollständig aufgesteckten Endposition befindlichen Schutzhülle nach Fig. 4 (C) ein Aufsteckvorgang veranschaulicht. Für die Veranschaulichung ist in Fig. 4 die obere Halbschale der Schutzhülle weg gelassen, um den Blick auf die wesentlichen Strukturen an der Messeranordnung und in der unteren Halbschale frei zu geben.

In Fig. 4 (A) ragt das Halteelement HE in entspannter, nicht elastisch verformter Stellung gegen die Seitenwand SL der unteren Halbschale US in den Innenraum der Schutzhülle. Beim Aufstecken der Schutzhülle auf die Messeranordnung wird das Halteelement HE durch die Außenkante UK des Untermessers unter elastischer Verformung in Richtung der Seitenwand SL gedrückt, wie in Fig. 4 (B) dargestellt. In der vollständig aufgesteckten Position der Schutzhülle auf der Messeranordnung nach Fig. 4 (C) ist das Halteelement HE unter der Einwirkung der bei der elastischen Formung auftretenden Rückstellkraft wieder von der Seitenwand SL weg gedrückt bis zur Anlage des Halteelements HE an der in der Seitenkante UK des Untermessers ausgesparten Haltestruktur HS. Durch die verbleibende Vorspannung des Halteelements HE ist die Schutzhülle vorteilhafterweise wackelfrei auf der Messeranordnung gehalten. Fig. 5 zeigt die Position der Schutzhülle auf der Messeranordnung nach Fig. 4 (C) in Seitenansicht.

Ein elastisch verformbares Halteelement könnte in nicht dargestellter Ausführung auch senkrecht zur Messerebene des Untermessers in eine Aussparung oder Vertiefung oder hinter einen Vorsprung am Untermesser eingreifen. Die in Fig. 4 skizzierte Variante mit seitlich gegen die Außenkante des Untermessers elastisch verschiebbarem Halteelement hat den Vorteil, dass die die beiden Halbschalen zusammen haltenden Steckverbindungen durch die Rückstellkraft des Halteelements nicht belastet ist und dass ein Aufstecken bei beliebiger Position des Obermessers möglich ist.

In Fig. 6 ist in vergrößerter Darstellung ein Ausschnitt mit dem in die Aussparung in der Seitenkante des Untermessers eingreifenden Halteelement HE dargestellt, wobei das Halteelement an einer Anlagefläche AF an der Haltestruktur HS anliegt und an dieser Anlagefläche formschlüssig gegen Abfallen in mit der Arbeitsrichtung AR zusammen fallenden Abziehrichtung gehalten ist. An der Anlagefläche AF zwischen der Haltestruktur HS und dem Halteelement HE verläuft die Tangente an die der Haltestruktur zugewandte Fläche des Halteelements gegen die Abziehrichtung geneigt, so dass bei einer vom Benutzer in Abziehrichtung ausgeübten Kraft auf die Schutzhülle eine Kraftkomponente auf das Halteelement HE wirkt, welche das Halteelement unter weiterer elastischer Verformung entgegen der Rückstellkraft in Richtung der Seitenwand SL drückt und ein Ausgleiten des Halteelements HE aus der Vertiefung gegen die Seitenkante UK des Untermessers ermöglicht.

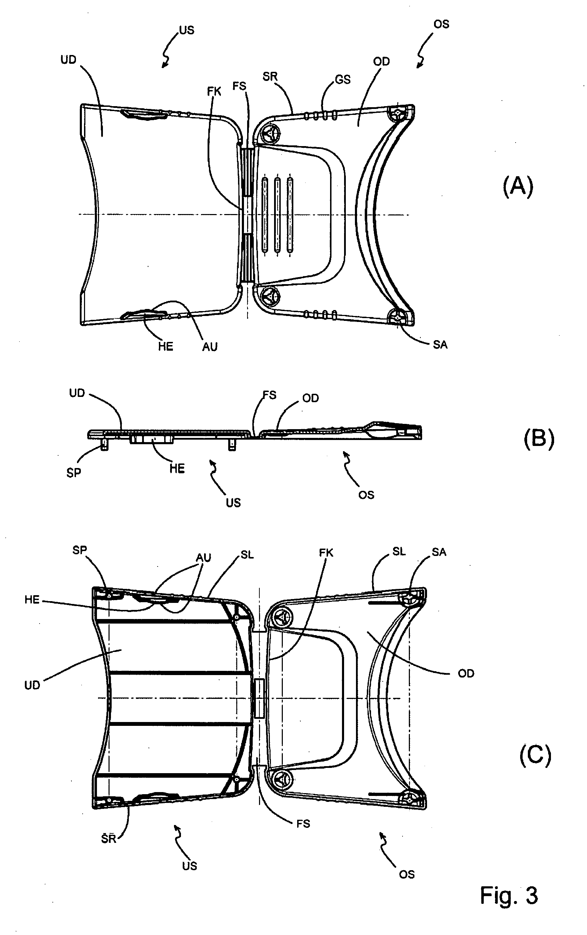

Fig. 3 zeigt die auseinander geklappte Hülle, wie sie vorteilhafterweise aus dem Spritzgusswerkzeug ausgestoßen wird, in einer Ansicht auf die Außenseiten der Deckwände der beiden Halbschalen OS, US nach Fig. 3 (A), in einer Ansicht auf die Innenseiten der Halbschalen nach Fig. 3 (C) und in einer Seitenansicht nach Fig. 3 (B). Die Seitenwände SR, SL sind vorteilhafterweise auf der dem Innenraum abgewandten Seite der Halteelemente durchgehend ausgeführt, so dass das Halteelement selbst geschützt angeordnet ist und der Benutzer auch nicht versehentlich in das Halteelement eingreifen und damit selbst das Abziehen blockieren kann. Um die Beweglichkeit des Halteelements in dessen geschilderter Ausführungsform in Richtung der elastischen Verformbarkeit auf die Seitenwand SL zu zu ermöglichen, ist das Halteelement lediglich an zwei entgegen gesetzten Enden EV und EH mit der Seitenwand SL verbunden. Um das Spritzgusswerkzeug als einfaches Auf-Zu-Werkzeug gestalten zu können, ist in der unteren Halbschale US, an welcher das Halteelement HE ausgebildet ist, eine Aussparung AU in der Deckwand der unteren Halbschale vorgesehen, welche in der in Fig. 6 dargestellten Projektion senkrecht zu der Fläche der Deckwand der unteren Halbschale gegen das Halteelement HE allseitig beabstandet ist. Im Spritzgusswerkzeug ragt von der die Außenseite der Deckwand der unteren Halbschale bestimmenden Fläche ein Vorsprung in Richtung der anderen Werkzeughälfte, welcher die Geometrie der in Fig. 6 dem Benutzer abgewandten Seite des Halteelements bestimmt. Zum Entformen des fertigen Spritzgusskörpers kann die untere Halbschale US samt dem Halteelement HE von dieser Werkzeughälfte entnommen werden, ohne dass eine Zwangsentformung eines elastischen Teiles des Kunststoffkörpers erforderlich ist und ohne dass das Werkzeug selbst zusätzliche bewegliche Teile wie Schieber oder dergleichen enthält.

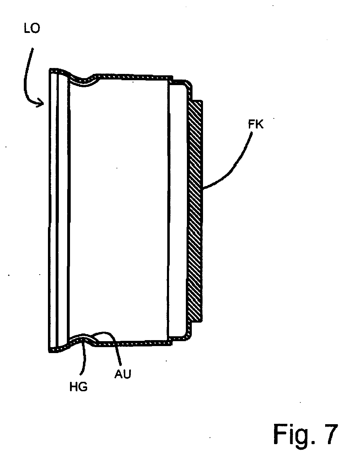

In Fig. 7 ist eine alternative Ausführungsform dargestellt, welche gleichfalls ein bogenförmiges elastisches Halteelement, welches von einer Seitenwand der Schutzhülle nach innen ragt, vorsieht, skizziert. Hierbei ist angenommen, dass die Schutzhülle bereits in der geschlossenen, taschenförmigen Gestalt im Spritzgusswekzeug ohne Unterteilung in zwei Halbschalen fertig gestellt wird. Für die Beweglichkeit des Halteelements HG in der in Fig. 7 dargestellten Form sind in der Oberschale und in der Unterschale bogenförmige Aussparungen vorgesehen, welche in der Ansicht nach Fig. 7 mit Projektion senkrecht zu den Flächen der Deckwände von oberer und unterer Halbschale gegen das Halteelement einen Abstand aufweisen, vorgesehen. Um die Schutzhülle als in der geschlossenen Form fertigen Kunststoffkörper im Werkzeug herzustellen, muss der Innenraum der Schutzhülle durch einen Kernkörper ausgespart bleiben. Die Innenkontur der Halteelemente ist durch einen solchen Kernkörper bestimmt und die Entformung der Schutzhülle aus dem Werkzeug erfordert eine Zwangsentformung, bei welcher das Halteelement während der Entformung aus einer Vertiefung in dem Kernkörper seitlich ausgedrückt wird. Die Herstellung der Formhülle in der bereits geschlossenen Gestalt ermöglicht aber nicht die Gestaltungsfreiheit von dreidimensionalen Strukturen wie bei der Herstellung in Form zweier Halbschalen, so dass die ausführlich geschilderte Variante der aus zwei Halbschalen zusammen gefügten Schutzhülle die bevorzugte Variante darstellt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Gartenschneidgerät, insbesondere Grasschere, mit einer von einem Gerätegehäuse weg weisenden flachen Messeranordnung (MA) und einer die Messeranordnung (MA) mehrseitig umgebenden lösbar mit dem Gerät verbindbaren Schutzhülle (SH),
wobei die Schutzhülle (SH) wenigstens ein entgegen einer Rückstellkraft verlagerbares Halteelement aufweist, welches bei mit dem Gerät verbundener Schutzhülle (SH) mit einer Haltestruktur (HS) des Geräts in formschlüssigem Eingriff steht,
**dadurch gekennzeichnet,**
**dass** das Halteelement und/oder die Haltestruktur (HS) mit wenigstens einer schräg zu der Abziehrichtung der Schutzhülle (SH) verlaufenden Anlagefläche ausgebildet ist, an der eine in Abziehrichtung der Schutzhülle (SH) wirkende Benutzerkraft in eine das Halteelement entgegen der Rückstellkraft von der Haltestruktur (HS) weg wirkende Kraftkomponente umgesetzt wird.

2. Gerät nach Anspruch 1, **dadurch gekennzeichnet, dass** die Haltestruktur (HS) an der Messeranordnung (MA) ausgebildet ist.

3. Gerät nach Anspruch 2, **dadurch gekennzeichnet, dass** die Messeranordnung (MA) ein bezüglich des Gerätegehäuses feststehendes Untermesser (UM) und ein im Betrieb dazu oszillierend bewegliches Obermesser (OM) aufweist, und dass die Haltestruktur (HS) an dem Untermesser (UM) ausgebildet ist.

4. Gerät nach Anspruch 2 oder 3, **dadurch gekennzeichnet, dass** die Haltestrukturen (HS) als seitliche Aussparung in einer Außenkante (UK) der Messeranordnung (MA) ausgeführt ist.

5. Gerät nach einem der Ansprüche 1 bis 4, **dadurch gekennzeichnet, dass** die Schutzhülle (SH) flach taschenförmig mit einer unteren und einer oberen Deckwand (OD, UD), welche die Messeranordnung (MA) in Richtung senkrecht zur Messerebene einschließen, und mit zumindest abschnittsweise entlang der Außenkanten (UK) der Messeranordnung (MA) führenden Seitenwänden (SL, SR) ausgebildet ist.

6. Gerät nach Anspruch 5, **dadurch gekennzeichnet, dass** das Halteelement von einer Seitenwand in Richtung der Messeranordnung (MA) ragt.

7. Gerät nach Anspruch 6, **dadurch gekennzeichnet, dass** die Schutzhülle (SH) aus zwei Halbschalen (OS, US) entlang von Trennfugen zusammengefügt ist, wobei jede Halbschale (OS, US) eine der beiden Deckwände (OD, UD) enthält.

8. Gerät nach Anspruch 7, **dadurch gekennzeichnet, dass** die beiden Deckwände (OD, UD) entlang einer Kante dauerhaft miteinander verbunden sind.

9. Gerät nach Anspruch 7 oder 8, **dadurch gekennzeichnet, dass** die Halbschalen (OS, US) durch lösbare Verbindungselemente verbunden und die Schutzhülle (SH) durch Lösen der Halbschalen (OS, US) entlang der Trennfuge geöffnet werden kann.

10. Gerät nach einem der Ansprüche 1 bis 5, **dadurch gekennzeichnet, dass** die Schutzhülle (SH) als Kunststoffkörper ausgeführt ist.

11. Gerät nach Anspruch 5 und Anspruch 10, **dadurch gekennzeichnet, dass** das wenigstens eine Halteelement einteilig mit einer der beiden Deckwände (OD, UD) verbunden ausgeführt ist.

12. Gerät nach Anspruch 11, **dadurch gekennzeichnet, dass** wenigstens ein Halteelement von einer Seitenwand in Richtung der Messeranordnung (MA) ragt und Seitenwand und Halteelement einteilig mit einer der beiden Deckwände (OD, UD) ausgeführt ist.

13. Gerät nach Anspruch 12, **dadurch gekennzeichnet, dass** die Deckwand (OD, UD) im Bereich des Halteelements ausgespart ist.

14. Gerät nach Anspruch 13, **dadurch gekennzeichnet, dass** das Halteelement streifenförmig ausgeführt und an wenigstens einem Ende, vorzugsweise an beiden Enden mit der Seitenwand und/oder der Deckwand (OD, UD) ausgeführt ist.

15. Gerät nach einem der Ansprüche 5 bis 14, **dadurch gekennzeichnet, dass** beide Seitenwände (SL, SR) einteilig mit derselben Deckwand (OD, UD) ausgebildet sind.

16. Gerät nach einem der Ansprüche 1 bis 14, **dadurch gekennzeichnet, dass** das Halteelement elastisch verformbar ist.

## Claims

1. A garden cutting device, in particular a grass shears, with a flat blade arrangement (MA) pointing away from a device housing and a protective sheath (SH) detachably connectable to the device and enclosing the blade arrangement (MA) on multiple sides,
wherein the protective sheath (SH) has at least one holding element which is displaceable against a reset force and in positive engagement with a holding structure (HS) in the case that the protective sheath (SH) is connected to the device,
**characterized in that**
the holding element and/or the holding structure (HS) is designed with at least one contact surface that extends obliquely to the removal direction of the protective sheath (SH) and a user force acting on the contact surface in the removal direction of the protective sheath (SH) is translated into a force component acting on the holding element counter to the reset force away from the holding structure (HS).

2. The device according to Claim 1, **characterized in that** the holding structure (HS) is designed on the blade arrangement (MA).

3. The device according to Claim 2, **characterized in that** the blade arrangement (MA) has a lower blade (UM) stationarily fixed with respect to the device housing and an upper blade (OM) that moves in oscillation during operation, and the holding structure (HS) is designed on the lower blade (UM).

4. The device according to Claim 2 or 3, **characterized in that** the holding structure (HS) is implemented as a lateral recess in an outer edge (UK) of the blade arrangement (MA).

5. The device according to one of Claims 1 through 4, **characterized in that** the protective sheath (SH) is designed as a flat pocket comprising an upper and a lower covering wall (OD, UD), which enclose the blade arrangement (MA) in a direction perpendicular to the blade plane, and side walls (SL, SR) running at least in sections along the outer edges (UK) of the blade arrangement (MA).

6. The device according to Claim 5, **characterized in that** the holding element protrudes from a side wall in the direction of the blade arrangement (MA).

7. The device according to Claim 6, **characterized in that** the protective sheath (SH) is joined together from two half shells (OS, US) along separating joints, wherein each half shell (OS, US) contains one of the two covering walls (OD, UD).

8. The device according to Claim 7, **characterized in that** the two covering walls (OD, UD) are permanently connected to one another along an edge.

9. The device according to Claim 7 or 8, **characterized in that** the half shells (OS, US) are connected by detachable connecting elements and the protective sheath (SH) can be opened by detaching the half shells (OS, US) along the separating joint.

10. The device according to one of Claims 1 through 5, **characterized in that** the protective sheath (SH) is designed as a plastic material body.

11. The device according to Claim 5 and Claim 10, **characterized in that** the at least one holding element is implemented as one piece connected to one of the two covering walls (OD, UD).

12. The device according to Claim 11, **characterized in that** at least one holding element protrudes from a side wall in the direction of the blade arrangement (MA) and the side wall and holding element is designed as one piece with one of the two covering walls (OD, UD).

13. The device according to Claim 12, **characterized in that** the covering wall (OD, UD) is recessed in the area of the holding element.

14. The device according to Claim 13, **characterized in that** the holding element is implemented in strip shapes and is implemented on at least one end, preferably on both ends with the side wall and/or the covering wall (OD, UD).

15. The device according to one of Claims 5 through 14, **characterized in that** the two side walls (SL, SR) are designed as one part with the same covering wall (OD, UD).

16. The device according to one of Claims 1 through 14, **characterized in that** the holding element is elastically deformable.

## Revendications

1. Outil de coupe de jardin, notamment cisailles à gazon, avec un dispositif de découpe (MA) plat s'éloignant d'un carter et avec une enveloppe de protection (SH) rattachable à l'appareil, détachable, entourant sur plusieurs côtés le dispositif de découpe (MA),
l'enveloppe de protection (SH) présentant au moins un élément de rétention déplaçable contre une force de rappel et qui, lorsque l'enveloppe de protection (SH) est liée à l'appareil, est en correspondance de forme avec une structure de rétention (HS) de l'appareil,
**caractérisé en ce que** l'élément de rétention et/ou la structure de rétention (HS) est constitué d'au moins une surface de contact inclinée par rapport à la direction d'extraction de l'enveloppe de protection (SH), sur laquelle une force exercée par un utilisateur et s'exerçant dans la direction d'extraction de l'enveloppe de protection (SH) est convertie en une composante de force s'exerçant contre la force de rappel de la structure de rétention (HS).

2. Appareil selon la revendication 1, **caractérisé en ce que** la structure de rétention (HS) est disposée sur le dispositif de découpe (MA).

3. Appareil selon la revendication 2, **caractérisé en ce que** le dispositif de découpe (MA) présente une lame inférieure (UM) fixe par rapport au carter de l'appareil et une lame supérieure (OM) mobile oscillante en fonctionnement, et **en ce que** la structure de rétention (HS) est constituée contre la lame inférieure (UM).

4. Appareil selon la revendication 2 ou 3, **caractérisé en ce que** la structure de rétention (HS) est réalisée sous forme d'évidement latéral dans un angle externe (UK) du dispositif de découpe (MA).

5. Appareil selon une des revendications 1 à 4, **caractérisé en ce que** l'enveloppe de protection (SH) est conçue plane en forme de poche avec une paroi inférieure et une paroi supérieure (UD, OD) qui enferment le dispositif de découpe (MA) en direction perpendiculaire au plan de découpe, et avec des parois latérales (SL, SR) courant au moins par sections le long de l'angle externe (UK) du dispositif de découpe (MA).

6. Appareil selon la revendication 5, **caractérisé en ce que** l'élément de rétention fait saillie par rapport à une paroi latérale dans la direction du dispositif de découpe (MA).

7. Appareil selon la revendication 6, **caractérisé en ce que** l'enveloppe de protection (SH) est constituée de deux demi-coques (OS, US) réunies le long d'une jointure, chaque demi-coque (OS, US) contenant une des deux parois (OD, UD).

8. Appareil selon la revendication 7, **caractérisé en ce que** les deux parois supérieure et inférieure (OD, UD) sont liées durablement l'une à l'autre le long d'un angle.

9. Appareil selon la revendication 7 ou 8, **caractérisé en ce que** les deux demi-coques (OS, US) peuvent être liées par des éléments de liaison détachables et **en ce qu'**on peut ouvrir l'enveloppe de protection (SH) en détachant les demi-coques (OS, US) le long de la jointure.

10. Appareil selon une des revendications 1 à 5, **caractérisé en ce que** l'enveloppe de protection (SH) est réalisée en plastique.

11. Appareil selon la revendication 5 et la revendication 10, caractérisé en ce que'au moins un élément de rétention est réalisé lié en un seul bloc avec une des deux parois (OD, UD).

12. Appareil selon la revendication 11, **caractérisé en ce qu'**au moins un élément de rétention dépasse d'une paroi latérale en direction du dispositif de découpe (MA) et **en ce que** la paroi latérale et l'élément de rétention sont réalisés en un seul bloc avec une des deux parois supérieure et inférieure (OD, UD).

13. Appareil selon la revendication 12, **caractérisé en ce que** la paroi supérieure ou inférieure (OD, UD) est évidée dans la région de l'élément de rétention.

14. Appareil selon la revendication 13, **caractérisé en ce que** l'élément de rétention est réalisé en forme de bande et est réalisé à au moins une extrémité, de préférence aux deux extrémités, avec la paroi latérale et/ou la paroi supérieure ou inférieure (OD, UD).

15. Appareil selon une des revendications 5 à 14, **caractérisé en ce que** les deux parois latérales (SL, SR) sont constituées en un seul bloc avec la même paroi supérieure ou inférieure (OD, UD).

16. Appareil selon une des revendications 1 à 14, **caractérisé en ce que** l'élément de rétention est élastiquement déformable.
